# EUROPÄISCHE PATENTSCHRIFT

(11) **EP 1 034 868 B1**
(45) Veröffentlichungstag und Bekanntmachung des Hinweises auf die Patenterteilung: **29.10.2003**
(21) Anmeldenummer: 00103304.2
(22) Anmeldetag: 17.02.2000
(51) Int. Cl.: B23D 31/00, C21D 9/40

(54) **Verfahren zur Ausbildung einer Anrissstelle zum Bruchtrennen eines Bauteiles aus einem Kohlenstoffstahl**
Method for forming a cracking site for fracture separation of a component of carbon steel
Procédé de formation d'une zone d'amorce de rupture pour la séparation par cassure d'un composant en acier au carbone

(30) Priorität: 12.03.1999 DE 19911067
(43) Veröffentlichungstag der Anmeldung: 13.09.2000
(73) Patentinhaber: Bayerische Motoren Werke Aktiengesellschaft, 80809 München (DE)
(72) Erfinder: Luchner, Clemens, 85598 Baldham (DE); Schimmelpfennig, Dierk, 80801 München (DE)

(56) Entgegenhaltungen:
- EP-A- 0 432 915
- EP-A- 0 713 741
- WO-A-96/24458
- WO-A-97/22430
- DD-A- 220 340
- DE-A- 4 316 719
- DE-A- 19 825 307

## Beschreibung

Die Erfindung bezieht sich nach dem Oberbegriff des Patentanspruches 1 auf ein Verfahren zur Ausbildung einer Anrißstelle zum Bruchtrennen eines Bauteils aus einem Kohlenstoffstahl, bei dem zur gezielten Bruchauslösung eine Anrißstelle mittels Strahlenergie (Laserstrahl, Elektronenstrahl) erzeugt wird, wobei zumindest abschnittsweise entlang einer Seite der Bruchtrennebene von der Bauteil-Oberfläche aus durch Stege voneinander getrennte, trichterförmig sacklochartige Vertiefungen durch Schmelzen, Verdampfen und/oder Ausblasen erzeugt werden, und durch Verschneidung benachbarter trichterförmiger Vertiefungen oberflächennahe Steg-Spitzen mit durch Eigenabschreckung jeweils glashart versprödetem Querschnitt zur Ausbildung von Härterissen als zum Bruchtrennen dienender Starterrisse erzielt werden.

Ein derartiges Verfahren ist aus der WO 97/22430 bekannt, wonach bei einem Bauteil, z.B. einem Pleuel, aus einem Kohlenstoffstahl mittels Laser-Bohren bzw. Laser-Perforieren die Randzone jeder sacklochartigen Vertiefung aufgeschmolzen wird und diese Randzonen insbesondere in den sich überschneidenden Bereichen in den Steg-Spitzen durch Wärmeabfluß in das umgebende Material sowie gegebenenfalls durch das Aus- bzw. Anblasen mit Luft und/oder Sauerstoff rasch abkühlen, wobei das Gefüge des verwendeten Kohlenstoffstahls mit C ca. 0,5 bis 0,85 % zu Martensit umgewandelt wird.

Diese Gefügeumwandlung zumindest in den Steg-Spitzen zu Martensit ergibt eine hohe Versprödung über deren gesamten Querschnitt mit der Folge, daß aufgrund der hohen Härtespannungen in den Steg-Spitzen selbsttätig sich Härterisse ausbilden, die bei einer gezielten Brucheinleitung in das Bauteil als Starterrisse dienen, von denen die Brucheinleitung zum Abtrennen eines Bauteil-Abschnittes ausgeht.

Der Erfindung liegt die Aufgabe zugrunde, für ein Bauteil aus einem niedrig legierten Kohlenstoffstahl mit einem Kohlenstoffgehalt unter 0,5 % eine Möglichkeit aufzuzeigen, auch für diese Kohlenstoffstähle das bekannte Verfahren anwenden zu können.

Diese Aufgabe ist mit dem Patentanspruch 1 gelöst, und zwar dadurch, dass das bei einem Bauteil aus einem Kohlenstoffstahl mit C <0,5 % zunächst zumindest im Bereich der Anrissstelle eine Oberflächenhärtung durchgeführt wird und anschließend die trichterförmigen Vertiefungen der Anrissstelle erzeugt werden.

Das Verfahren ist vorteilhaft durchgeführt dadurch, dass bei einer Einhärtetiefe von ca. 0,2 bis 0,8 mm die Vertiefungen jeweils eine Tiefe zwischen 0,4 bis 0,9 mm aufweisen. Mit dieser Ausgestaltung werden also Laserperforationen innerhalb der Einhärtetiefe als auch die Einhärtetiefe überschreitende Vertiefungen erzielt, je nachdem, ob die Starterrisse lediglich in den Steg-Spitzen durch Härterisse ausgebildet werden sollen oder ob die Starterrisse über die gesamte Höhe der Stege durch Härterisse erzeugt werden sollen.

Das Verfahren ist beispielsweise bevorzugt angewendet bei einem mechanischen Steuerring, der bei einer Hubkolbenmaschine im Kurbelwellen-Triebwerk als ein drehbar angeordneter Exzenter einer Hubveränderung für ein änderbares Verdichtungsverhältnis (ε) dient. Ein derartiger Exzenter ist beispielsweise aus der DE 43 16 719 A1 bekannt.

Weiter findet das erfindungsgemäße Verfahren bevorzugt Anwendung bei einem mechanischen Steuerring, der bei einer ventilgesteuerten Hubkolbenmaschine in einer Ventilsteuerung mit einer Steuervorrichtung zur steuerbaren Änderung der Ventilöffnungsperiode mit einer verstellbaren Schub-Schwinge zusammenwirkt, wie dies aus der deutschen Patentanmeldung DE 198 25 307 A1 hervorgeht.

Mit dem erfindungsgemäßen Verfahren zur Herstellung eines Steuerrings ist für jeden der Steuerringe eine fertigungstechnisch und kostengünstig vorteilhafte Herstellung dadurch erzielt, dass der jeweilige, aus einem Einsatzstahl mit C <0,35 bestehende Steuerring nach einer spanabhebenden Vorbearbeitung einschließlich zusätzlicher Gestaltungen allseitig 0,2 bis 0,4 mm tief einsatzgehärtet ist, dass anschließend in der Lagerbohrung jedes Steuerringes diametral angeordnete Anrissstellen mittels gepulstem Laser gebohrt und die Steg-Spitzen glashart versprödet sind, und dass sich dann an die Fertigbearbeitung unter maßlicher Vorhaltung für bleibende Bruchtrenn-Verformungen ein einstufiges Bruchtrennen des jeweiligen Steuerringes anschließt.

Zusätzliche fertigungstechnische Ausgestaltungen der Steuerringe sind in weiteren Unteransprüchen angegeben.

Die Erfindung ist anhand von in der Zeichnung dargestellten Ausführungsbeispielen beschrieben. Es zeigt
- Figuren 1 und 2: einen Steuerring für eine Steuervorrichtung einer Ventilsteuerung,
- Figur 3: einen als Exzenterring gestalteten Steuerring zur Anordnung zwischen einem Hubzapfen einer Kurbelwelle und einem Pleuel zur Änderung des Verdichtungsverhältnisses.

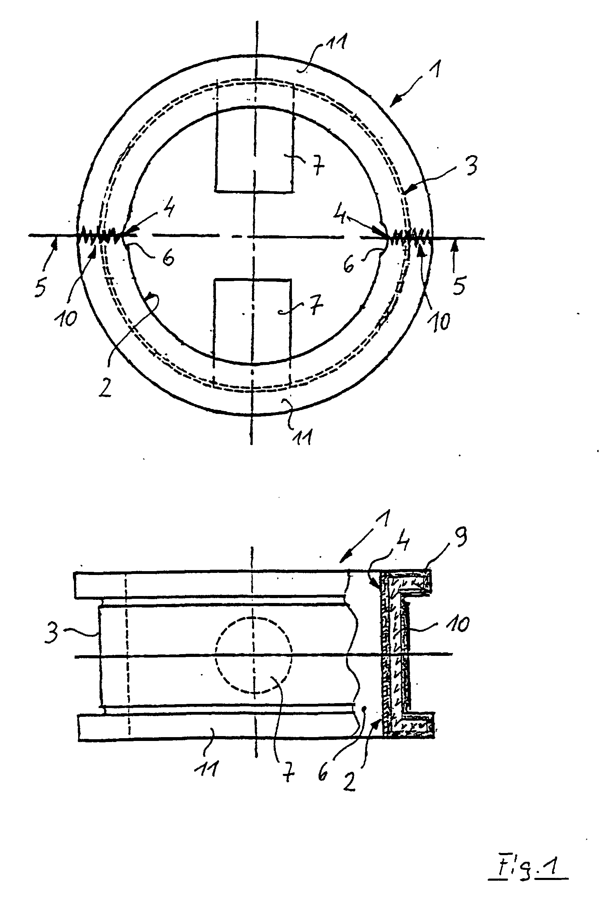

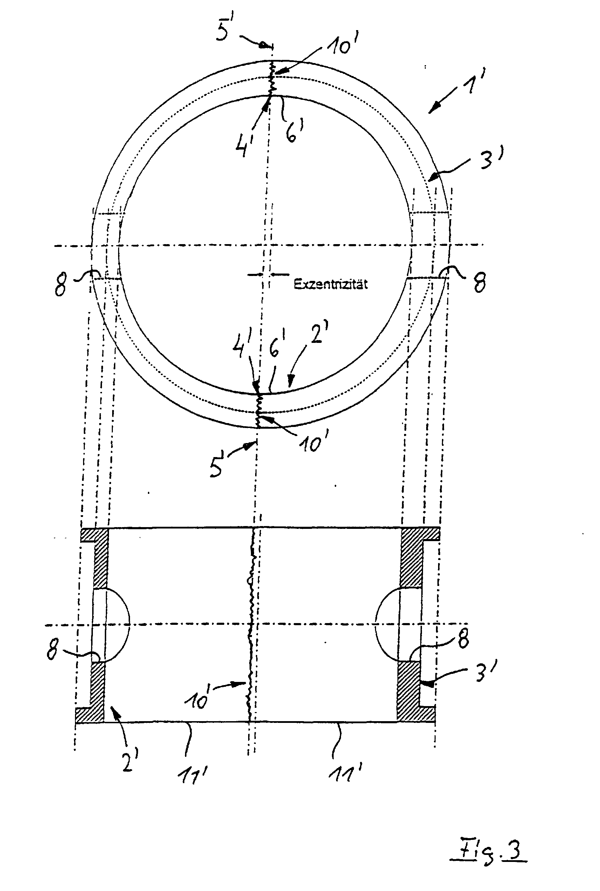

Die in den Figuren 1 und 3 gezeigten Steuerringe 1 und 1' sind aus einem Kohlenstoffstahl mit einem Kohlenstoffgehalt C <0,5 %, vorzugsweise <0,35 % gebildet. Beide Steuerringe 1 und 1' können sowohl eine innere Gleitfläche 2 bzw. 2' und/oder eine äußere Gleitlagerfläche 3 bzw. 3' aufweisen und sind zwecks Anordnung auf einer nicht glatten, nicht gezeigten Welle zweiteilig auszubilden. Für die zweiteilige Ausbildung ist wegen der einfacheren gegenseitigen Positionierung das Bruchtrennen bevorzugt.

Ausgangspunkt für das Bruchtrennen ist das aus der WO 97/22430 bekannte Verfahren zur Ausbildung einer Anrißstelle zum Bruchtrennen eines Bauteils aus einem Kohlenstoffstahl, bei dem zur gezielten Bruchauslösung eine Anrißstelle 4, 4' mittels Strahlenergie, z.B. Laserstrahl oder Elektronenstrahl, erzeugt wird, wobei zumindest abschnittsweise entlang einer Seite der Bruchtrennebene 5, 5' von der Bauteiloberfläche 6, 6' aus durch Stege voneinander getrennte, trichterförmig sacklochartige Vertiefungen durch Schmelzen, Verdampfen und/oder Ausblasen erzeugt werden, und durch Verschneidung benachbarter, trichterförmiger Vertiefungen oberflächennahe Steg-Spitzen mit durch Eigenabschreckung jeweils glashart versprödetem Querschnitt zur Ausbildung von Härterissen als zum Bruchtrennen dienender Starterrisse erzielt werden.

Zur Anwendung dieses Verfahrens bei den Steuerringen 1 und 1' mit einem Kohlenstoffstahl C <0,5 % zur glasharten Versprödung zumindest der Steg-Spitzen wird erfindungsgemäß eine Oberflächenhärtung vorgeschlagen.

Als besonders vorteilhafte Vorgehensweise hat sich in Versuchen ergeben, daß das Bauteil bzw. der jeweilige Steuerring 1, 1' zunächst mindestens im Bereich der Anrißstelle 4, 4' oberflächengehärtet wird und daß anschließend die trichterförmigen Vertiefungen der Anrißstellen 4, 4' mittels Laser gebohrt werden. Hierbei können bei einer bevorzugten Einhärtetiefe von ca. 0,2 bis 0,5 mm die lasergebohrten Vertiefungen jeweils eine Tiefe zwischen 0,4 bis 0,9 mm aufweisen. Damit ergibt sich bei entsprechender Kombination von Einhärtetiefe und Tiefe der jeweiligen lasergebohrten Vertiefung eine Gestaltung, bei der die Vertiefung über die gesamte Tiefe oberflächenversprödet ist bis in die Steg-Spitzen oder aber mindestens sind die Steg-Spitzen glashart versprödet. Die vorgenannte Zuordnung von Einhärtetiefe und Tiefe der lasergebohrten Vertiefungen richtet sich unter anderem wesentlich nach den zu brechenden Querschnitten.

Im weiteren wird vorgeschlagen, daß der jeweilige, aus einem Einsatzstahl mit C <0,35 bestehende Steuerring 1, 1' nach einer spanabhebenden Vorbearbeitung einschließlich zusätzlicher Gestaltungen, wie beispielsweise Führungszapfen 7 oder Eingreifbohrungen 8, allseitig 0,2 bis 0,4 mm tief einsatzgehärtet ist, bei 9, daß anschließend in der Lagerbohrung 2, 2' jedes Steuerringes 1, 1' diametral angeordnete Anrißstellen 4, 4' mittels gepulstem Laser gebohrt und die Steg-Spitzen durch Eigenabschreckung durch das umgebende Material glashart versprödet sind, ferner daß sich dann an die Fertigbearbeitung unter maßlicher Vorhaltung für bleibende Bruchtrenn-Verformungen ein einstufiges Bruchtrennen des jeweiligen Steuerringes 1, 1' anschließt. Im übrigen sind die Steg-Spitzen derart vertieft, daß sie von der Endbearbeitung nicht erfaßt sind.

Weiter wird für jeden Steuerring 1,1' vorgeschlagen, daß jeder mit einer inneren und äußeren Gleitfläche 2, 2' versehene, bruchgetrennte Steuerring 1, 1' werkstoffabhängig Bruchtrennflächen 10, 10' mit einer das halbe Lagerspiel von 0,025 bis 0,035 mm überschreitender Mindestrauhigkeit aufweist, und daß nach dem Bruchtrennen die jeweiligen bruchgetrennten Steuerringteile 11, 11' zum Setzen der Bruchstruktur wieder zusammengesetzt und gegeneinander gepreßt sind. Damit sind die Bruchtrennflächen 10, 10' stabilisiert. Mit der weiter vorne beschriebenen Relation der Mindestrauhigkeit der Bruchtrennflächen 10, 10' zum jeweils gewählten Lagerspiel soll sichergestellt sein, daß durch einen Schmieröldruck beaufschlagte Steuerringteile 11, 11' in bezug auf das jeweilige Lagerspiel ausreichend gegenseitig positioniert bleiben und so in vorteilhafter Weise zusätzliche Maßnahmen sich erübrigen können.

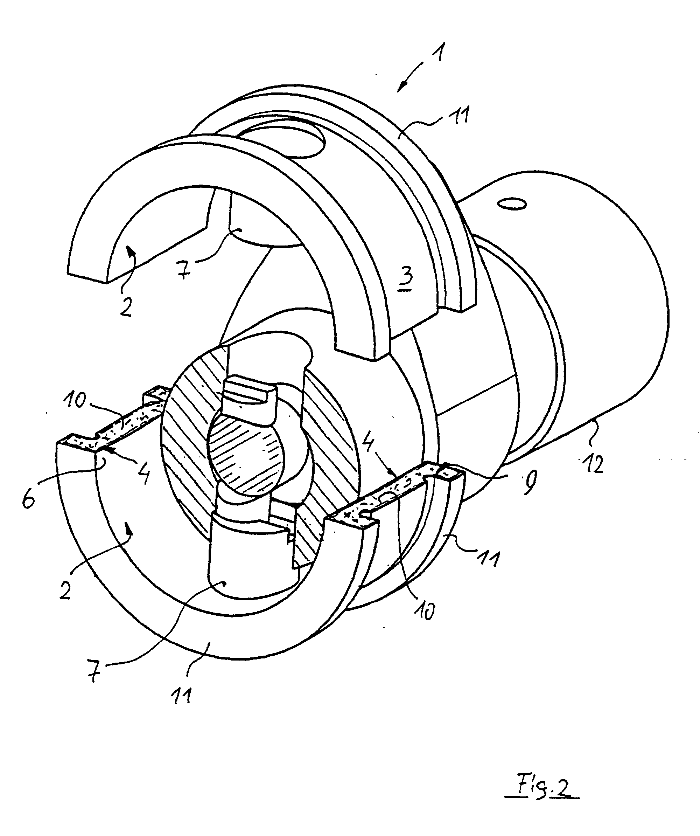

Schließlich kann jeder druckgeschmierte Steuerring 1, 1' über seine äußere Gleitfläche 3' in einem ebenfalls bruchgetrennten Lager, wie z.B. einem Pleuel oder einer Schubschwinge, angeordnet sein, wobei bei einem radial auswärts wirkenden Schmieröldruck auf die Steuerringteile 11, 11' diese nach einer Montage auf einer jeweiligen, z.B. in Figur 2 gezeigten Welle 12, entlang der Bruchtrennflächen 10, 10' zumindest abschnittsweise miteinander fest verbunden werden, um ein für die Lagerflächen 2, 2' schädliches Aufklaffen der Bruchtrennflächen 10, 10' zu vermeiden. Als feste Verbindung kann beispielsweise Schweißen mittels Laser oder Kleben vorgesehen sein.

Der Steuerring 1 dient bei einer ventilgesteuerten Hubkolbenmaschine in einer Ventilsteuerung mit einer Steuervorrichtung zur steuerbaren Änderung der Ventilöffnungsperiode, wobei der Steuerring 1 mit einer verstellbaren Schub-Schwinge zusammenwirkt, wie dies in der deutschen Patentanmeldung 198 25 307 vorgeschlagen ist.

Demgegenüber dient der Steuerring 1' bei einer Hubkolbenmaschine im Kurbelwellen-Triebwerk als ein drehbar angeordneter Exzenter zur gesteuerten Hubveränderung für ein änderbares Verdichtungsverhältnis ε, wie dies in der deutschen Patentanmeldung DE-A 43 16 719 vorgeschlagen wurde.

Das Verfahren zur Ausbildung einer Anrißstelle nach Anspruch 1 wurde bevorzugt anhand von ringförmiger Bauteile erläutert, es ist jedoch nicht auf diese Bauteile beschränkt.

## Patentansprüche

1. Verfahren zur Ausbildung einer Anrissstelle zum Bruchtrennen eines Bauteiles aus einem Kohlenstoffstahl,
- wobei zur gezielten Bruchauslösung eine Anrissstelle (4, 4') mittels Strahlenergie (Laserstrahl, Elektronenstrahl) erzeugt wird und
- zumindest abschnittsweise entlang einer Seite der Bruchtrennebene (5, 5') von der Bauteil-Oberfläche (6, 6') aus durch Stege voneinander getrennte, trichterförmig sacklochartige Vertiefungen durch Schmelzen, Verdampfen und/oder Ausblasen erzeugt werden und
- durch Verschneidung benachbarter, trichterförmiger Vertiefungen oberflächennahe Steg-Spitzen mit durch Eigenabschreckung jeweils glashart versprödetem Querschnitt zur Ausbildung von Härterissen als zum Bruchtrennen dienender Starterrisse erzielt werden,
**dadurch gekennzeichnet, dass**
- das Bauteil (1, 1') aus einem Kohlenstoffstahl mit C < 0,5 % besteht,
- das Bauteil (1, 1') zunächst mindestens im Bereich der Anrissstelle (4, 4') oberflächengehärtet wird, und
- anschließend die trichterförmigen Vertiefungen der Anrissstelle (4, 4') mittels Laser gebohrt werden.

2. Verfahren nach Anspruch 1, **dadurch gekennzeichnet, dass** bei einer Einhärtetiefe von ca. 0,2 bis 0,8 mm die Vertiefungen jeweils eine Tiefe zwischen 0,4 bis 0,9 mm aufweisen.

3. Verfahren nach einem oder mehreren der Ansprüche 1 bis 2,
- **gekennzeichnet durch** die Anwendung bei einem mechanischen Steuerring (1'), der
- bei einer Hubkolbenmaschine im Kurbelwellen-Triebwerk als ein drehbar angeordneter Exzenter einer Hubveränderung für ein änderbares Verdichtungsverhältnis (ε) dient (z.B. DE 43 16 719 A1).

4. Verfahren nach einem oder mehreren der Ansprüche 1 bis 3,
- **gekennzeichnet durch** die Anwendung bei einem mechanischen Steuerring (1), der
- bei einer ventilgesteuerten Hubkolbenmaschine in einer Ventilsteuerung mit einer Steuervorrichtung zur steuerbaren Änderung der Ventilöffnungsperiode mit einer verstellbaren Schub-Schwinge zusammenwirkt (DE 198 25 307 A1).

5. Verfahren nach Anspruch 3 oder 4 zur Herstellung eines Steuerrings, **dadurch gekennzeichnet,**
- **dass** der jeweilige, aus einem Einsatzstahl mit C < 0,35 % bestehende Steuerring (1, 1') nach einer spanabhebenden Vorbearbeitung einschließlich zusätzlicher Gestaltungen allseitig 0,2 bis 0,4 mm tief einsatzgehärtet wird,
- **dass** anschließend in der Lagerbohrung (2, 2') jedes Steuerringes (1, 1') diametral angeordnete Anrissstellen (4, 4') mittels gepulstem Laser gebohrt und die Steg-Spitzen glashart versprödet sind, und
- **daß** sich dann an die Fertigbearbeitung unter maßlicher Vorhaltung für bleibende Bruchtrenn-Verformungen ein einstufiges Bruchtrennen des jeweiligen Steuerringes (1, 1') anschließt.

6. Verfahren nach Anspruch 5 zur Herstellung eines Steuerrings, **dadurch gekennzeichnet,**
- **dass** jeder mit einer inneren und/oder einer äußeren Gleitfläche (2, 2'; 3, 3') versehene, bruchgetrennte Steuerring (1, 1') werkstoffabhängig Bruchtrennflächen (10, 10') mit einer etwa das halbe Lagerspiel (0,025 bis 0,035 mm) überschreitenden Mindestrauhigkeit aufweist, und
- **dass** nach dem Bruchtrennen die jeweiligen bruchgetrennten Steuerring-Teile (11, 11') zum Setzen der Bruchstruktur wieder zusammengesetzt und gegeneinander gepresst sind.

7. Verfahren nach Anspruch 5 und 6 zur Herstellung eines Steuerrings, **dadurch gekennzeichnet,**
- **dass** jeder druckgeschmierte Steuerring (1, 1') über seine äußere Gleitfläche (3, 3') in einem bruchgetrennten Lager (Pleuel, Schubschwinge) angeordnet wird und
- **daß** bei radial auswärts wirkendem Schmieröldruck auf die Steuerringteile (11, 11') diese nach einer Montage entlang der Bruchtrennflächen (10, 10') zumindest abschnittsweise miteinander fest verbunden sind (Schweißen, Kleben).

## Claims

1. A method of forming an incipient crack for fracturing a carbon steel component
- wherein the fracture is initiated in controlled manner by producing an incipient crack (4, 4') by radiant energy (laser beam or electron beam) and
- funnel-shaped blind bore-like recesses separated by webs and starting from the component surface (6, 6') are formed at least at places along one side of the fracture plane (5, 5') by melting, evaporation and/or blowing out, and
- web peaks near the surface and with a glass-hard cross-section embrittled by self-quenching are obtained by intersection of neighbouring funnel-shaped recesses, forming hardness cracks for initiating the fracture,
**characterised in that**
- the component (1, 1') is made of carbon steel with C < 0.5%,
- the component (1, 1') is initially surface-hardened at least in the region of the incipient crack (4, 4') and
- the funnel-shaped recesses for the incipient crack (4, 4') are then drilled by laser.

2. A method according to claim 1, **characterised in that** when the depth of hardening is about 0.2 to 0.8 mm the recesses each have a depth between 0.4 and 0.9 mm.

3. A method according to one or more of claims 1 to 2,
- **characterised by** application to a mechanical control ring (1') which
- in a reciprocating engine is used in the crankshaft drive unit as a rotatably mounted eccentric in a stroke-altering means for varying the compression ratio (ε) (e.g. DE 43 216 719 A1).

4. A method according to one or more of claims 1 to 3,
- **characterised by** application to a mechanical control ring (1),
- which in a valve-controlled reciprocating engine co-operates with an adjustable thrust rocker arm in a valve control means comprising a device for controllably varying the valve opening period (DE 198 25 307 A1).

5. A method according to claim 3 or Claim 4 for producing a control ring, **characterised in that**
- the control ring (1, 1'), made of case-hardened steel with C < 0.35%, is first cut and then case-hardened on all sides to a depth of 0.2 to 0.4 mm, including additional structures, after which
- diametrally disposed incipient cracks (4, 4') are drilled by a pulsed laser in the bearing bore (2, 2') of each control ring (1, 1') and the web peaks are made glass-hard by embrittlement, followed by
- single-stage fracturing of the respective control ring (1, 1') during final machining, with moderate allowance for permanent fracture deformation.

6. A method according to claim 5 for producing a control ring, **characterised in that**
- each fractured control ring (1, 1'), formed with an inner and/or an outer sliding surface (2, 2'; 3, 3') is provided, depending on the material, with fracture surfaces (10, 10') having a minimum roughness exceeding approximately half the bearing clearance (0.025 to 0.035 mm) and
- after fracturing, the fractured parts (11, 11') of the control ring are brought together and pressed against one another in order to consolidate the fracture structure.

7. A method according to claim 5 and 6 for producing a control ring, **characterised in that**
- each pressure-lubricated control ring (1, 1'), via its outer sliding surface (3, 3'), is disposed in a fractured bearing (collecting rod, thrust rocker arm) and
- in the event of a radially acting outward pressure of lubricating oil on the parts (11, 11') of the control ring, the said parts are firmly connected after assembly, at least at places, along the fracture surfaces (10, 10') (by welding or sticking).

## Revendications

1. Procédé de formation d'une zone d'amorce de rupture pour la séparation par cassure d'un composant en acier au carbone, dans lequel pour le déclenchement approprié de la rupture, une zone d'amorce de rupture (4, 4') est produite au moyen d'énergie rayonnée (faisceau laser, faisceau électronique), et
des évidements du type trous borgnes en forme d'entonnoirs, séparés les uns des autres par des nervures, sont produits par fusion, évaporation et/ou soufflage au moins par segments le long d'un côté du plan de séparation par cassure (5, 5'), à partir de la surface (6, 6') du composant, et
par intersection d'évidements voisins en forme d'entonnoirs, des pointes de nervures proches de la surface avec respectivement une section fragilisée de manière dure comme le verre par propre refroidissement brusque sont obtenues pour la formation de tapures de trempe en tant que ruptures de départ servant à la séparation par cassure,
**caractérisé en ce que**
le composant (1, 1') est en acier au carbone avec C < 0,5%,
le composant (1, 1') subit d'abord, du moins dans la région de la zone d'amorce de rupture (4, 4'), une trempe superficielle, et
ensuite les évidements en forme d'entonnoirs de la zone d'amorce de rupture (4, 4') sont percés au moyen d'un laser.

2. Procédé selon la revendication 1,
**caractérisé en ce que**
pour une profondeur de trempe de 0,2 à 0,8 mm environ, les évidements présentent respectivement une profondeur entre 0,4 et 0,9 mm environ.

3. Procédé selon l'une ou plusieurs des revendications 1 à 2,
**caractérisé par**
l'utilisation d'une bague de commande mécanique (1') qui,
sur un moteur à piston linéaire, sert dans le mécanisme moteur à vilebrequin d'excentrique, disposé de manière rotative, d'une variation de course pour un rapport de compression variable (ε) (par exemple DE 43 16 719 A1).

4. Procédé selon l'une ou plusieurs des revendications 1 à 3,
**caractérisé par**
l'utilisation d'une bague de commande mécanique (1), qui sur un moteur à piston linéaire commandé par soupape, coopère dans une commande de soupape avec un dispositif de commande pour la variation, pouvant être commandée, de la période d'ouverture de la soupape avec un mécanisme oscillant bielle-manivelle réglable (DE 198 25 307 A1).

5. Procédé selon la revendication 3 ou 4 pour la fabrication d'une bague de commande,
**caractérisé en ce que**
la bague de commande respective (1, 1'), constituée d'un acier de cémentation avec C < 0,35% est, après un pré-usinage par enlèvement de copeaux, y compris des façonnages supplémentaires, cémentée de tous côtés à une profondeur de 0,2 à 0,4 mm,
ensuite, dans l'alésage du roulement (2, 2') de chaque bague de commande (1, 1'), des zones d'amorce de rupture (4, 4') disposées diamétralement sont percées au moyen d'un laser pulsé, et les pointes de nervures sont fragilisées de manière dure comme le verre, et
l'usinage de finition est suivi d'une séparation par cassure en une seule étape de la bague de commande (1, 1') respective, avec réserve dimensionnelle pour déformations restantes de la séparation par cassure.

6. Procédé selon la revendication 5 pour la fabrication d'une bague de commande,
**caractérisé en ce que**
chaque bague de commande (1, 1') séparée par cassure munie d'une surface de glissement intérieure et/ou extérieure (2, 2'; 3, 3') présente des surfaces de séparation par cassure (10, 10'), en fonction du matériau, avec une rugosité minimale dépassant sensiblement le demi-jeu de palier (de 0,025 à 0,035 mm), et
après la séparation par cassure les parties respectives (11, 11') de la bague de commande séparées par cassure sont à nouveau assemblées et pressées l'une contre l'autre pour le tassement de la structure de cassure.

7. Procédé selon la revendication 5 et 6 pour la fabrication d'une bague de commande,
**caractérisé en ce que**
chaque bague de commande (1, 1') graissée sous pression est disposée, par sa surface de glissement extérieure (3, 3'), dans un roulement séparé par cassure (bielle, mécanisme oscillant bielle-manivelle), et
en présence d'une pression d'huile de graissage agissant radialement vers l'extérieur sur les parties (11, 11') de la bague de commande, celles-ci, après un montage le long des surfaces de séparation par cassure (10, 10'), sont reliées à demeure l'une à l'autre, au moins par segments (soudage, collage).
